(19) Europäisches Patentamt
European Patent Office
Office européen des brevets

(11) EP 2 860 934 B1

(12) **EUROPEAN PATENT SPECIFICATION**

(45) Date of publication and mention
of the grant of the patent:
**14.08.2019 Bulletin 2019/33**

(51) Int Cl.:
***H04L 29/06*** *(2006.01)*

(21) Application number: **13382397.1**

(22) Date of filing: **09.10.2013**

(54) **A computer implemented method to prevent attacks against authorization systems and computer programs products thereof**

Computerimplementiertes Verfahren zur Verhinderung von Angriffen gegen Autorisierungssysteme und Computerprogrammprodukte dafür

Procédé mis en oeuvre par ordinateur pour empêcher des attaques dirigées contre des systèmes d'autorisation et leurs produits de programmes informatiques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.04.2015 Bulletin 2015/16**

(73) Proprietor: **Telefonica Digital España, S.L.U.**
**28013 Madrid (ES)**

(72) Inventors:
• **Alonso Cebrián, José María**
**28013 Madrid (ES)**

• **Barroso Berrueta, David**
**28013 Madrid (ES)**
• **Palazón Romero, José María**
**28013 Madrid (ES)**
• **Guzmán Sacristán, Antonio**
**28013 Madrid (ES)**

(74) Representative: **Carlos Hernando, Borja et al**
**Garrigues IP, S.L.P.**
**Hermosilla, 3**
**28001 Madrid (ES)**

(56) References cited:
**US-A1- 2004 030 932     US-A1- 2009 183 247**
**US-A1- 2013 247 165**

**Description**

Field of the art

The present invention is directed, in general, to authentication and authorization systems, and more particularly to a computer implemented method and computer program products to prevent attacks against authorization systems in which the access to different resources and actions defined for a user is controlled for instance by a service provider.

Background of the invention

In recent years, web fraud detection market has increased considerably, so innovation in authentication and authorization processes has become of great importance.

The increasing complexity of applications has led to the adoption of many security techniques increasingly sophisticated. One of the classifications that can be proposed for the study of these security techniques allows distinguishing between authentication solutions and authorization solutions. The authentication techniques are designed to verify a person is the one who claims to be. In order to add more reliability in verifying that actually a person corresponds to the identity that is being checked, many alternative authentication schemes can be taken or the number of factors to build this authentication can be extended. Once a user is identified, it has to be determined what resources can be accessed and how this access can be performed. This is the duty of the authorization models.

There are many solutions designed to strengthen the authentication processes and, by extension, to fortify the authorization processes. There are authorization schemes that allow flexibility and robustness in assigning permissions to users to ensure secure access to system resources. However, there are threats such as Man in the Browser (MitB) techniques which cannot yet be thwarted by adopting any of the existing schemes for the authentication/authorization, or this adoption is too expensive to afford it. These threats directly affect the way the access to specific resources is performed. A method to address these threats involves the designing of brand new security mechanisms. These mechanisms must guarantee that once the identity of a user has been verified and the level of authorization to a resource for this user has been checked, the actions taken by the user of that resource are not intercepted and modified by any attacker.

Within the category of authorization, different techniques that facilitate access to various system resources are included. The user role information, the access control data provided when the user is authenticated, are examples of information that can be used to determine whom to give access to what resources and how this access has to be guaranteed. Ultimately, determining what should be accessed by the users, will be specified for each application. For this reason, sometimes it will be difficult to provide a general authorization scheme. It will be necessary to define an application-specific logic to determine which users can access and how they perform these accesses. From this idea, there are many solutions that propose secure and flexible schemes for the implementation of the authorization. In all these solutions, the security must be guaranteed by the correct selection of the authentication mechanism and a correct implementation of the selected authorization scheme.

Some of the solutions provide the flexibility by defining their own SDK to encourage the use of their schemes for authentication/authorization. Today, most of the SDK are based on concepts introduced by OAuth and do not suppose a risk by themselves. This applies to Microsoft Live Connect, Facebook PHP SDK and Windows 8 SDK Authentication Broker. If they exist, the threats should come from a deficient use of these SDK. In fact, regardless of threats derived by a poor implementation of the scheme chosen, most of the threats that can be defined on an authorization system coincide with the threats defined for authentication systems. This coincidence has to do with the misuse of the credentials used to manage permissions granting access to resources [2], [5].

In [2] four different levels are defined in terms of the consequences of authentication and authorization errors and misuse of credentials. Level 1 is the lowest level (the most insecure) and level 4 is the highest.

- Level 1- An attacker can perform repeated logon trials by guessing possible values of the token authenticator. An attacker is also able to replay previously captured messages (between a legitimate user and a verifier) to authenticate as that user to the verifier. National Instute of Standars and Technology (NIST) recommends the usage a single or multi-factor authentication with no identity proof in order to provide protection against these online guessing and replay attacks.
- Level 2- An attacker can listen passively to the authentication protocol to capture information which can be used in a subsequent active attack to masquerade as the user. NIST recommends the usage of single or multi-factor authentication to provide protection against these eavesdropping attacks and all the attacks from the level 1.
- Level 3- The attacker positions himself or herself in between the user and verifier so that he or she can intercept and alter the content of the authentication protocol messages. The attacker typically impersonates the verifier to the user and simultaneously impersonates the user to the verifier. Conducting an active exchange with both parties simultaneously may allow the attacker to use authentication messages sent by one legitimate party to successfully authenticate to the other. NIST recommends the usage of a multi-factor authentication and wide use of OTP. It also suggests a token used for authentication to be unlocked by the user using a password or biometrics. Adopting these solutions provides protection against verifier impersonation attacks, MitM attacks and the attacks from level 2.

- Level 4- An attacker is able to insert himself or herself between a user and a verifier subsequent to a successful authentication exchange between the latter two parties. The attacker is able to pose as a user to the verifier, or vice versa, to control session data exchange. On the other hand, the attacker may compromise or otherwise exploit authentication tokens and may intercept all input or output communications from the device (Man-in-the-device (MitD) attacks or Man-in-the-Browser (MitB) attacks). The attacker can do this infecting the system with malware. NIST suggests employing Multi-factor authentication with FIPS-140-2 certified tamper-resistant hardware (hardware tokens) [4] to get protection against these session hijacking attacks and the attacks from the level 3.

For the first three levels, attacks and existing solutions are both focused on the way of verifying the user's identity. At level 4, NIST proposes the use of solutions against session hijacking and others attacks over authentication processes. This session hijacking involves an attacker take advantage of the legitimate exchange of credentials that a user makes to comply with the authentication process. Once this validation is accomplished, the attacker then intervenes in the communication that takes place. This type of attack can be implemented in two ways: actively acting, hijacking the connection and leaving out of it to the legitimate user, or, remaining hidden and modifying the content of communication transparently to the user. Whatever the implementation of this attack, it is important to observe that this is an attack aimed at breaking the authorization system, leaving intact, though useless, the authentication system. Although there are alternatives to proactively protect systems from this threat, there is no adequate solution to mitigate the effects of the attack once the device from which the resource access is requested, is committed.

NIST suggests employing FIPS-140-2 certified tamper-resistant hardware (hardware tokens) [4]. Using these devices provides the users the ability to generate a single use password (one time password, OTP) to prove their identity to each transaction. In addition, there are hardware implementations of these tokens that can generate other OTPs coded to contain information on how to complete a specific transaction.

Different criteria can be defined to establish comparison between authentication/authorization schemes. In [1] the authors suggest the need to define three criteria in order to perform an effective comparison. These aspects are: security, usability and complexity on implementation (deployability). This paper presents an intensive study to instrument the comparison through the definition of metrics. Following table summarizes the metrics defined for each criterion.

| Usability | Memory-Effortless |
| | Scalable-for-Users |
| | Nothing-to-Carry |
| | Physical-Effortless |
| | Easy-to-Learn |
| | Efficient-to-Use |
| | Infrequent-Errors |
| | Easy-recovery-from-Loss |
| Deployability | Accessible |
| | Negligible-Cost-per-User |
| | Server-Compatible |
| | Browser-Compatible |
| | Mature |
| | Non-Proprietary |
| Security | Resilient-to-Physical-Observation |
| | Resilient-to-Targeted-Impersonation |
| | Resilient-to-Throttled-Guessing |
| | Resilient-to-Unthrottled-Guessing |
| | Resilient-to-Internal-Observation |
| | Resilient-to-Leaks-from-Other-Verifiers |
| | Resilient-to-Phishing |
| | Resilient-to-Theft |
| | No-Trusted-third-Party |
| | Requiring-Explicit-Consent |

(continued)

| Unlikable |
| --- |

In the case of security criterion, the proposed metric set summarizes all the aspects that are usually estimated in defining a threat model. In the definition of these models it is necessary to adopt a number of decisions. And these decisions define the working scenario. For example in the case of OAuth 2.0 [5] the adopted assumptions are as follows:

- The attacker has full access to the network between the client and authorization servers and the client and the resource server, respectively. The attacker may eavesdrop on any communications between those parties. He is not assumed to have access to communication between the authorization server and resource server.
- An attacker has unlimited resources to organize an attack.
- Two of the three parties involved in the OAuth protocol may collude to mount an attack against the third party. For example, the client and authorization server may be under control of an attacker and collude to trick a user to gain access to resources.

Attending to the metrics introduced above, is possible to determine that solutions corresponding to the higher security level (level 4) have poor performance in deployability and usability. Once the assessment of a system allows to determine in which level has to be deployed its authentication system, it is needed to evaluate if the users are authenticated safely and correctly. Although there are some tools that aid in this task [3], [6], deploys in the level 4 are difficult to evaluate correctly. In terms of usability, the use of tampering resistant hardware tokens goes against the adoption of these solutions by users, and it has been proved that this situation leads to a misuse of the credential systems. These tokens are expensive. They are independent devices that the user has to custody and that can be employed with one service provider only. If the users have to deal with more than one service provider that has adopted these tampering resistant hardware tokens, they have to take into custody as many tokens as service providers they have.

Furthermore, in terms of authorization, in [7] the authors explain that, aside from some security issues of each SDK, developers who choose to integrate with one of them make assumptions that can lead to security problems. This is because SDKs are often not well documented and the security exploits nearly always stem from attackers who find ways to violate these assumptions system implementers relied upon.

Along with these difficulties, other problems must be considered to understand the constant increase in fraud arising from the theft of digital identities. For instance, it is not possible to measure a homogeneous security level in all users' digital accounts. It is needed a solution that can equalize the security level of all digital accounts that a user owns. This solution should extend this security not only to the authentication processes but also to the resource authorization processes and all procedures relating to such accounts. Furthermore, there is no solution that would mitigate the effects of called MitB or MitD attacks without being expensive or significantly impair usability.

US2009183247 (A1) provides systems and methods of securing access to a network. Access to the network is secured using multifactor authentication, biometrics, strong encryption, and a variety of wireless networking standards. Biometrics includes fingerprints, facial recognition, retinal scan, voice recognition and biometrics can are used in combination with other authentication factors to create a multi-factor authentication scheme for highly secure network access. Requests that require access to secured network resources may be intercepted and a captive portal page returned to challenge a user. Biometric information returned in response to the portal page is used to authenticate the user and determine access rights to the network.

US2013247165 (A1) relates to a computer system that determines whether the computer system is able to access an authentication server. If the computer system is able to access the authentication server, the computer system requests a first set of credentials from a user. If the first set of credentials is valid, the computer system assigns the user a first role for performing operations on the computer system based on the first set of credentials. If the computer system is unable to access the authentication server, the computer system requests another set of credentials from the user. If the other set of credentials is valid, the computer system assigns the user another role for performing operations on the computer system based on the other set of credentials.

US2004030932 discloses some secure authentication protocols, particularly well-suited for use in authenticating mobile communications devices having limited computational resources,. In an illustrative embodiment, a network-based communication system includes a client device and at least two servers. First and second shares are generated from a first password associated with the client device, and stored in respective first and second servers. The client device submits additional information associated therewith to at least one of the first and second servers. Each of the first and second shares has the property that it is infeasible to determine solely therefrom correspondence of the additional information with the first password. The first and second servers then utilize the respective first and second shares to collectively determine said correspondence of the additional information with the first password. Advantageously, the correspondence determination may be made without requiring further interaction between the client device and one or both of the servers.

Therefore, a different approach is needed to improve the overall security in the authentication/authorization systems, whatever it is the scheme or schemes adopted, minimizing the impact on the usability and deployability of these systems, and especially preventing Man in the Browser threats.

References:

[1] Bonneau, J., Herley, C., van Oorschot, P. C., & Stajano, F. (2012, May). The quest to replace passwords: A framework for comparative evaluation of web authentication schemes. In Security and Privacy (SP), 2012 IEEE Symposium on (pp. 553-567). IEEE.

[2] Burr, W. E., Dodson, D. F., & Polk, W. T. (2006). Electronic authentication guideline. NIST Special Publication, 800, 63.

[3] Dalton, M., Kozyrakis, C., and Zeldovich, N., Nemesis: Preventing Authentication & Access Control Vulnerabilities in Web Application, In Proceedings of the 18th conference on USENIX security symposium, (pp. 267-282) USENIX Association.

[4] Evans, D., Bond, P., Bement, A., Security Requirements for Cryptographic Modules, FIPS PUB 140-2 - FEDERAL INFORMATION PROCESSING STANDARDS PUBLICATION. Online Resource: http://csrc.nist.gov/publications/fips/fips140-2/fips 1402.pdf

[5] McGloin M. & Hunt P. (2013, January) OAuth 2.0 Threat Model and Security Considerations. ISSN: 2070-1721. Online resource: http://tools.ietf.org/pdf/rfc6819.pdf.

[6] Sun, F., Xu, L., & SU,Z. (2011,August) Static detection of Access control vulnerability in web applications. In Proceedings of the 20th USENIX conference on Security (pp. 11-11). USENIX.

[7] Wang, R., Zhou, Y., Chen, S., Qadeer, S., Evans, D., & Gurevich, Y. (2013). Explicating SDKs: Uncovering Assumptions Underlying Secure Authentication and Authorization (Vol. 37). Microsoft Research Technical Report MSR-TR-2013.

Description of the Invention

To achieve the above, the invention provides a solution to prevent several attacks related with authentication and authorization processes. The solution comprises a method and a computer program as defined in independent claims 1 and 14, respectively. A number of embodiments is defined in the dependent claims. The solution is designed to limit the time in which an attacker is able to develop an attack. Therefore, it supposes a limit on the resources available to an attacker to organize and attack. First, the invention seeks to reduce the risk of an attack directed to an authentication/authorization process by temporarily blocking the operations execution mechanism. Thereby decreasing the period of exposure of these systems and, therefore, decreasing the chances of success of attack on the system. In addition, a first server or service provider can force the use of a second authentication phase (using an OTP infrastructure) for service providers who do not provide this option in their account management processes or even let the user activate it.

In addition, the proposed solution provides countermeasures against MitB that also gives support for multiple service providers with only one device, in an inexpensive and secured way. This MitB attack supposes that an attacker is able to insert himself between a user and a first server subsequent to a successful authentication exchange between the latter two parties. The attacker is able to pose as the user to the first server or vice versa to control session data exchange. On the other hand, the attacker may compromise or otherwise exploit authentication tokens and may intercept all input or output communications from the device (for example a browser or a computer). In this case, all the actions that have been invoked using the device or the information that has been displayed through it, have to be considered as suspicious. A secure channel is needed to assure the integrity of the operations.

According to a first aspect there is provided a computer implemented method to prevent attacks against authorization systems, comprising: receiving at least one first server a request in the name of a user to be logged into a service of said first server; and authorizing said request, said first server, by verifying user identification information of said user.

On contrary of the known proposals, and in a characteristic manner, in order said request to be authorized the method further comprises:

- sending, by said first server to a second server in connection with a user computing device with a dedicated program, a request about a status associated to said user;
- initializing a credential exchange between said first and second server in order to provide mutual authentication;
- verifying said associated status that has been previously set as valid or as invalid by said user and stored in a memory of said second server;

- sending, said second server, said associated status to said first server; and
- using said first server said received associated status for:

    ∘ authorizing said request for said service in the name of said user if said associated status is set as valid, or
    ∘ rejecting said request for said service if said associated status is set as invalid,

wherein in case said request to be logged into a service of said first server being authorized and a request is done in the name of said user to perform an operation, that could be any operation, in said first server using at least a part of the resources of said first server, the method comprises following steps:

- performing, an operation status verification with integrity protection associated to said user by means of:

    ∘ verifying, by said first server that the request to perform an operation is authorized by matching the request to perform the operation with an entry regarding an scheme entry status defined by the first server for an account of the user;
    ∘ demanding, the first server to the user information needed to perform the operation;
    ∘ sending, by the user, at least part of said information needed to the first server and a part of the information needed to the second server;
    ∘ upon receiving said first server the information needed, requesting to the second server an associated status for said operation;
    ∘ initializing a credential exchange between the first server and the second server;
    ∘ evaluating, by the second server the scheme entry status from a root to said entry; and
    ∘ sending, the second server, the result of said scheme entry status evaluation to said first server; and

- using, said first server, the result of said evaluation for allowing or blocking said request in the name of said user to perform said operation.

The status request associated to the user comprises the sending of a security token, said security token being generated during a previous pairing user accounts process. This token links the user with the first server without disclosure of any personal information of the user to the second server information. Then, the token is securely stored in a memory of the first server and in a memory of the second server once the user has configured the pairing of the first and second servers' identifications.

The credentials exchange to secure mutual authentication between the first server and the second server, is performed, preferably, via a standard authentication procedure based on certificates' exchange defining, as a result, a secured channel. The exchange is performed to verify that both first server and second server are who they claim to be.

The second server may notify the user in case said request to be logged into a service of the first server is rejected. For instance, by the sending of a Short Message Service (SMS), of an email, of or a message by a smartphone messenger application, or just by the highlighting or pushing in said dedicated program of said user computing device.

The associated status is set as valid (unlocked) or as invalid (locked) a certain period of time and can be modifiable by the user whenever the latter want it. For instance, the user can plan a locking/unlocking policy to automate the management of their accounts held with different servers using different criteria: time, geolocation (different policies for home, work, etc.). Another possibility for modifying said associated status can be by delegating the control said user has of their accounts to other users. This can be done by considering two different options. In the first one, a parental control mechanism is used so the children's (original) accounts access control is delegated to the parent control mechanism. In the second one, a single account allows multiple locks. In this latter case, the unlock action will require that multiple users unlock their locks concurrently. In both cases, the delegation is performed securely maintaining the privacy of every user unchanged.

The request to be logged into a service and/or the request to perform an operation may be recorded in order to provide statistics. In this way, the user can obtain system usage statistics that reflect activity of the system and track the attempts of impersonation. These statistics inform about when someone had attempted to access to a service with user's username.

In an embodiment, the whole information needed to perform the operation is sent by said user to the first server preferably using another dedicated program such as a browser. Then, said first server (300) takes from the whole information received from said user (100) the same part of information that said user (100) has sent to said second server (200) and encloses it with said requesting of the operation status; and the second server previous to perform the sending of the result of said scheme entry checks whether the information needed received from the user matches the information needed received from the first server, both information's being used as integrity tokens. Therefore, all these steps for integrity verification of the operation status are done in synchronous way.

In an embodiment, the integrity verification of the execution of said operation may be also done in an asynchronous way. In this case, the information's sent by the user to the second server is send after a request is made by the latter to said dedicated program, said request being made at least upon receiving from the first server the operation status request. Therefore, in this case, the first server waits until the user confirms the operation, that is, until the user sends the token integrity through the dedicated program. This confirmation could never happen; consequently a timeout associated with time the first server has to wait is established.

In both previous embodiments, the part of information sent to the second server is intended for performing a validation.

On contrary, in an embodiment, this information may also be used for completion of the operation information. In this case, the information needed to complete the operation is divided. So that the two parts are the two segments that complete the total information needed. One segment is sent to the first server and the other is sent to said second server. Therefore, the two servers, first and second, receive a different part of the information needed. The second server in this case encloses the received part of information with the result of said scheme entry status evaluation. All these steps are done in a synchronous way.

Alternatively, these steps may be done in an asynchronous way, according to yet another embodiment. In this case, the second server after having received the needed information from the dedicated program executes a callback to the first server to communicate the results of the verification status process and sends the part of information received to the first server.

Finally, as an option, the step of evaluating the scheme entry status performed by the second server may further include a second factor authentication comprising, if said scheme entry status is set as valid:

- sending, said second server an OTP to the first server within the result of the operation status request;
- requesting, the first server to the user, an OTP that the user is going to use as temporal second factor;
- sending, the second server the same OTP sent to the first server to the user through said another user dedicated program;
- recovering, the user, said requested temporal second factor OTP through said dedicated program, introducing it into said another user dedicated program and further sending it via said another user dedicated program to the first server; and
- checking, the first server, if the received OTP from the second server and the received temporal second factor OTP from said another user dedicated program matches in order to allowing or blocking said request in the name of said user to perform said operation.

The subject matter described herein can be implemented in software in combination with hardware and/or firmware, or a suitable combination of them. For example, the subject matter described herein can be implemented in software executed by a processor.

According to another aspect there is provided a computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.

Embodiments of the invention also embrace a computer program product including program code means adapted to perform a second factor authentication according to the method of claim 10.

Therefore, the present invention allows the user to activate the MitB mitigation by using the secure communication channel proposed by the invention. With the different options provided to exchange critical information related with the operations the integrity of its execution is guaranteed. Moreover, the invention also allows the user to: plan a locking/unlocking policy to automate the management of accounts held with different servers using different criteria: time, geo-localization (different policies for home, work, etc.); delegate the control of their accounts to other second server users; enable monitoring systems that allow users to be warned of identity theft attempts or untrue user's impersonation in operation execution requests, providing a course of action to take action to control the digital identity; establish a second factor for authentication for verifiers that are not providing it; establish an account to be blocked or unblocked and change it with immediate effect by the use of a switch control; fix a schedule to Valid/Invalid (Block/Unblock) an account or said operation automatically based on time and date settings. Once a check-status request is received the second server responds based on the current state of the scheduler; improve the security level of an account or said operation by configuring a second factor authentication integrated with second server; control different actions associated with an account, authorizing or banning the execution of them in a compatible manner with the authorization scheme established. This control is not limited to a lock/unlock command. In fact, it can be applied the same concepts introduced to control the authentication process (scheduling, second factor, etc.) and take advantage of the invention and make use of digital certificate to be authenticated by any service provider bypassing the password introduction.

The invention permits homogenizing the security level for all the different accounts a user has. It allows offering a security level comparable with level 4 defined by NIST. And this is done for different accounts that can be now controlled with only one device and regardless of the authentication/authorization scheme defined for every service provider.

The invention does not propose any new authentication/authorization scheme. Indeed, the intention is to complement the existent schemes to increase their security adding an extra security layer. Although this may limit its usability and deployability, the invention design is oriented to minimize the impact over these criteria. As it is stated before, the authentication scheme choice determinates the security risk that is assumed for an authorization system. What is proposed here is to reduce the risk taken with the choice of any authentication/authorization mechanism reducing the time in which this system is accessible to be broken.

Assuming that there is a relationship between the success and failure of an attack on the authorization system with the time in which this system is accessible (exposure time) as conditional probability (p (SuccessfulAttack | exposed)) is possible determining that the relative risk (RR) satisfies the following expression:

$$RR = \frac{p(SuccessfulAttack|exposed)}{p(SuccessfulAttack|unexposed)} > 1 \qquad \text{Eq. 1}$$

In this expression it is assumed that the probability of success of an attack is directly related to the exposure time. That is, the continuous exposure of a computer system, in this case the authentication system, increases the likelihood of success of an attack in contrast with a scenario in which the exposure is limited. In the same way one can evaluate the following expression:

$$\frac{\dfrac{p(SuccessfulAttack|exposed)}{p(FailedAttack|exposed)}}{\dfrac{p(SuccessfulAttack|unexposed)}{p(FailedAttack|unexposed)}} > 1 \qquad \text{Eq. 2}$$

Indicating that there is a greater probability for a successful attack if exists a continued systems exposure. It is also possible to estimate the portion of all successful attacks that could have been avoided if the exposure had been avoided (ARP). This is calculated with expression 3.

$$ARP = \frac{RR - 1}{RR} \qquad \text{Eq. 3}$$

This expression allows assessing the investment required to enable a solution designed to reduce the time that is accessible authentication process. The professional experience and technical knowledge of the documented attack techniques to break authentication/authorization systems confirm the assumption made earlier (RR> 1). Therefore, it can be asserted that ARP> 1 once the Account -locker is adopted.

This reduction in the exposure time allows mitigating the effects of most of the threats related with the authentication phase before a user can access to some privileged resources. This invention also permits reducing the exposure of particular actions that can be taken after the login process has been accomplished. Therefore, this exposure reduction supposes the limitation in the time in what the action can be executed and the establishment of a channel that allow to send critical information to assure the integrity of this action execution.

The invention encompasses the solutions for the threats defined by NIST. But, in this case, these solutions are provided to users through a dedicated program designed to be executed in a mobile device, which facilitates the interaction with a second server. In addition, this second server brings privacy in the communications relative to the control of the user's accounts and incorporates all the control information that the users have set about the actions the service providers have offered them. It also provide a solution to mitigate the man in the browser attacks guaranteeing operation integrity

## Brief Description of the Drawings

The previous and other advantages and features will be more deeply understood from the following detailed description of embodiments, with reference to the attached, which must be considered in an illustrative and non-limiting manner, in which:

Figure 1 is an illustration of the present invention general architecture.

Figure 2 is a flow diagram illustrating an account pairing sequence with authorization.

Figure 3 is a flow diagram illustrating how a status of a user account can be checked for authentication.

Figure 4 is a flow diagram illustrating a generalization of figure 3 concerning the operation status verification process.

Figure 5 is a flow diagram illustrating a first option for mitigating the effects of the MitB, according to an embodiment of the present invention.

Figure 6 is a flow diagram illustrating a second option for mitigating the effects of the MitB, according to an embodiment of the present invention.

Figure 7 is a flow diagram illustrating a third option for mitigating the effects of the MitB, according to an embodiment of the present invention.

Figure 8 is a flow diagram illustrating a fourth option for mitigating the effects of the MitB, according to an embodiment of the present invention.

Detailed Description of Several Embodiments

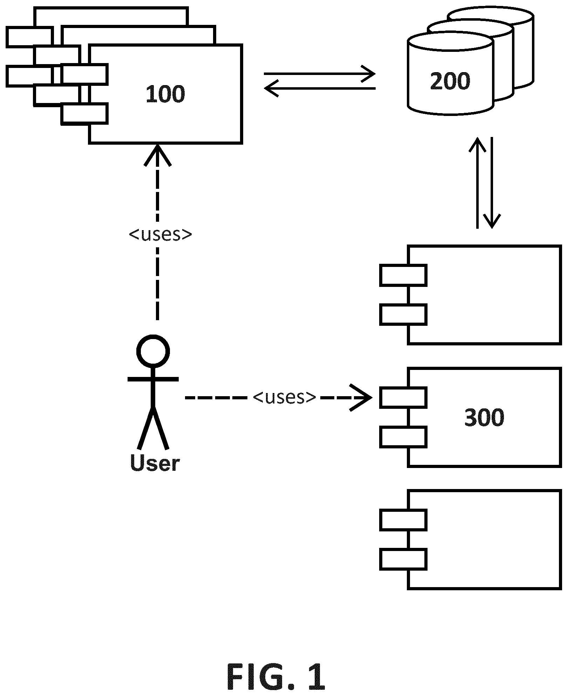

In reference to Figure 1 it is showed the general architecture of the present invention. Concerning Figure 1, a user computing device 100 such as a mobile phone, a smartphone, a tablet-PC or a PDA among any other, is used by said user in order to login into a dedicated program 102 in communication with a second server 200 and to manage the status for every first server 300 with which a user wants to request a service.

With this new proposal said user 100 can unblock said operation defined for a particular account created with said first server 300. As stated below, this action can enhance the control defined for this account by decision of the first server 300. In this decision, the first server 300 can choose to incorporate a new control of security beyond the block/unblock default option or the second factor of authentication. This control of security consists of to provide a communication channel from the user 100 to the first server 300, through the second server 200. The first server 300 can configure the system to ask the user 100 for a particular information related to said operation to be performed. This information can be used by the second server 200 to verify if the user 100 is who actually is demanding said operation and to confirm if the operation that has arrived to the first server 300 is exactly as the one the user 100 had ordered.

Assuming that the first server 300 could want to verify the integrity of the operation, it can be selected what parameters are critical to ensure the operation integrity. In this case, it is important that the requested information corresponds univocally with the operation critical parameter in order to identify it correctly.

In this architecture, the user 100, besides having an account in the second server 200, can have multiple accounts with different service providers. One of these service providers is the first server 300. Once the user 100 completes the login process with these accounts he or she will have access to multiple operations specific to each service providers. The second server 200 eases how a first server 300 can integrate this control within the logic of its applications.

When a first server 300 decides to integrate its services, it will provide the ability to link their accounts with the accounts that the user 100 has in the second server 200. When the said user 100 decides to establish this link, she or he starts a pairing process that ensures complete privacy to the user 100. Once the pairing process is completed, the user 100 can access the configuration of the control of the account with the first server 300 from a dedicated program 102 (i.e. a mobile application).

Every time the settings associated with an account are changed on said mobile application, this modification is immediately propagated to the second server 200 to change the status of the account that can be accessed by the first server 300.

Second server core implements the main function of the second server 200: lock or unlock said user account with the first server 300 and the operations provided by first server 300. In order to do that, the second server 200 accepts and processes the check-status requests sent from the first server 300. This second server 200 also manages all data about the links with said first server 300 defined by the user 100 and the requests for the pairing of new locks. The key is the user 100 is never asked for any private information. Once the user 100 creates his account with second server 200, he can establish locks with different service providers, like said first server 300. To activate these locks the second server 200, according to an embodiment, generates a token. A unique token and the definition of secured channels are needed to complete the pairing process between the user 100 and the first server 300. As result of this pairing process, the cryptographic token is sent from the second server 200 to the first server 300 who has to store this information with their user's personal data. Later, this cryptographic token will be used to request the corresponding lock status. The user 100 can modify the status of their locks, by the activation or configuration of the different options that second server 200 provides.

In case the user 100 has set up a lock with a second factor for authentication over an account or a particular action, the second server 200 will incorporate all the needed logic for the generation and communication of the OTP. When the second server 200 receives a request from the first server 300 asking for the user account status, a second factor of authentication is triggered. An OTP is generated and sent to the user 100. The same OTP is sent to the first server 300 along with the account status. If the status is ON and the user 100 has activated the second factor, the first server 300 should prompt the user to introduce the OTP to proceed with the operation.

Now, if the user 100 has set up a lock over a said operation with an integrity factor to verify that the operation parameters have not been modified, said second server 200 incorporates the needed logic to get the critical information from the user 100 and from the first server 300 and to check if both are equal. The second server 200 sends the result of the checking as the account status to the first server 300. In case of mismatching, the first server 300 can conclude that an intruder can be intercepting the information from the user 100. The first server 300 can then build mechanisms to elude the fraud and to raise security alerts.

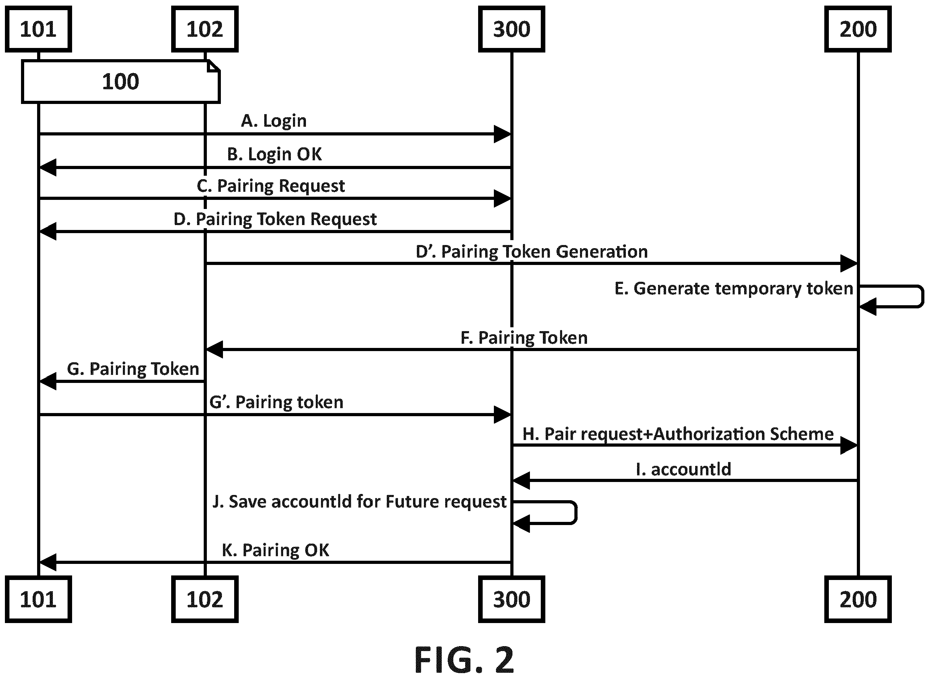

In reference to Figure 2 it is illustrated a pairing process of the user 100 account of the second server 200 with different accounts for different first servers 300. In Figure 2, once a user 100, using for instance the dedicated program 101 such as a browser, has completed the login process (A-B) with a first server 300 (in this particular case a Bank online, a social network, a credit card providers, etc.), the user 100 decides to perform said accounts' pairing process. The user 100 requests the pairing to the first server 300 (C) using the browser 101. As response, the first server 300 asks for a pairing token (D). The user 100 then uses the dedicated program 102 (D') to get this pairing token from the second server 200, after a previous login process. The second server 200 generates a token (for instance as an OTP) (E) and sends it to the user's dedicated program 102 (F). This token can be used for several pairing processes meanwhile it is valid. The user get the token (OTP) from the dedicated program 102 and introduces it in the web page displayed in the browser 101 by the first server 300 (G-G'). The first server 300 then sends the received token to the second server 200, after a previous credentials exchange (H). If the first server 300 identity is validated, the second server 200 stores the link between the user 100 and the first server 300 and generates a new token that identifies this link. This token (accountID) is sent to the first server 300 (I) and there it is stored for future communications (J). At last, a pairing acknowledges is sent to the user's browser 101 (K).

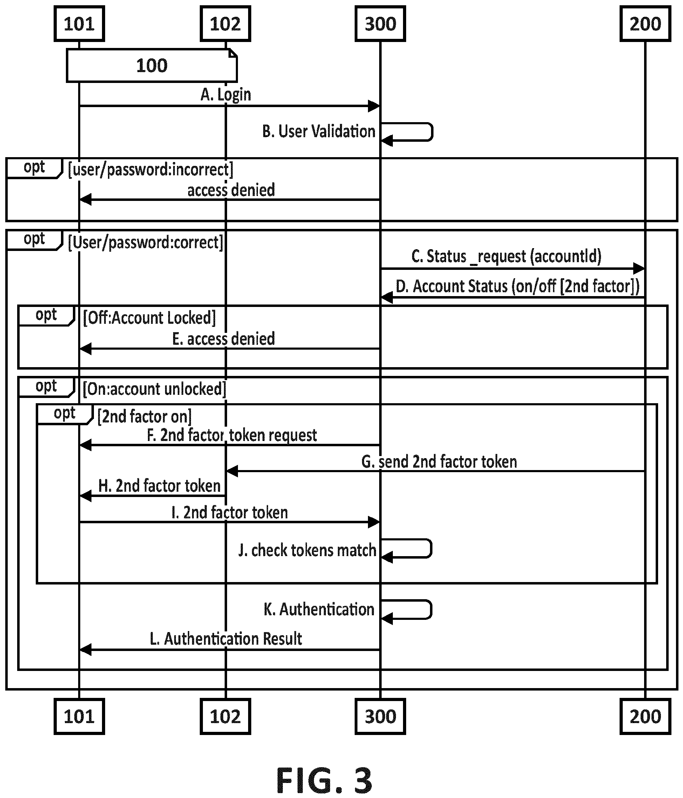

In reference now to Figure 3 it is illustrated how a status of a user account can be checked for authentication. In Figure 3, a user 100, using for example a browser 101, requests to be logged in a service (A) of a first server 300 so once user existence has been validated (B) by said first server 300, the latter demands to the second server 200 the user account status (C). Then the second server 200 initializes the credentials exchange before the result of the account status information is sent (D). With the result status, the first server 300 makes the decision of allowing or blocking the user access (E).

In an embodiment, if the account status is unlocked or valid but the second factor of authentication is on, within the answer of the status request, the second server 200 sends an OTP to the first server 300 that has to employ to complete the authentication. The first server 300 then requests to the user 100 the OTP that is going to be a temporal second factor (F). Then the second server 200 sends the same OTP to the to the user's dedicated program 102 (G). The user 100 recovers the OTP from the dedicated program 102 and introduces it in the browser 101 (H) and sends it to the first server 300 (I). The first server 300 can check if the OTP sent through the browser 101 matches with the one received with the account status (J). Depending on of the results of this verification, the first server performs the authentication process (K) and communicates the result to the user via 101.

When a first server 300 sends a Status_Request, the second server 200 understands that someone, with the proper service identification information (i.e. ID and password), is trying to access to the service. If the account status is set as blocked, or if this request has come in a moment that is not included in the interval defined by the user 100, the second server 200 registers this event as a fake attempt. The second server 200 could send, according to an embodiment, an alert of this event to the user if said user has configured it so (for instance by sending a Short Message Service (SMS), an email, a message by a smartphone messenger application, by a highlighting or pushing in said dedicated program 102 of said user computing device 100, etc.) or just update the statistics for a later revision. Then the second server 200 returns the status associated with the account as locked.

With the aim of improving the security of any authorization system, the use of the second server 200 is proposed as a new layer that gives the users the chance of control the access to the resources and procedures associated with their accounts defined with any first servers. These resources and procedures are seen as operations which depend on the main actions defined for an account (i.e. login process). This dependency is established like a hierarchy where the changes in the root entries are propagated to their children.

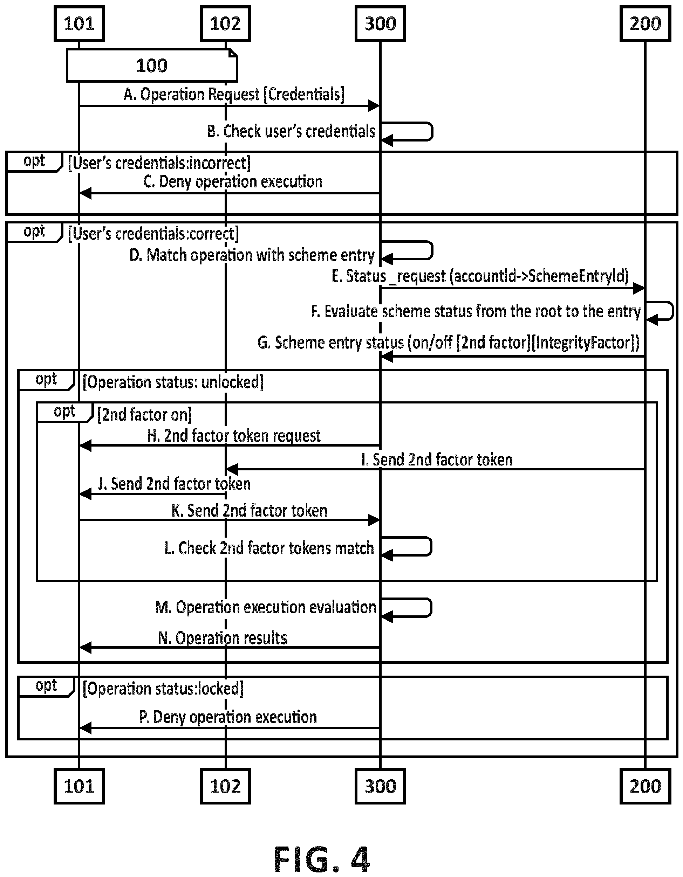

Figure 4 illustrates the operation status verification process of an operation requested by the user 100. This operation is proposed by the first server 300 attached to the account management. The user 100, using for example a browser 101, requests, according to an embodiment, to execute an operation related with an account (A) of a first server 300. This operation can be to be logged in a particular service or to execute some other action related with the services provided by first server 300 (e.g. Internet payment with a credit card). So once user existence has been validated (B) by said first server 300, the latter makes the correspondence of the operation requested with the scheme entry in the hierarchy defined by this user's account (D) and demands to the second server 200 this entry status (E).

Then the second server 200 initializes the credentials exchange before evaluating the scheme entry status from the root to the entry (F). The status of the user's account is retrieved and if it is unlocked the same evaluation is performed with every step founded until reach the scheme entry. The scheme entry status information is sent (G) and, with this information, the first server 300 makes the decision of allowing or blocking the user access to the operation.

The second factor of authentication can be activated if the scheme entry status is valid or unlocked in order to strengthen the process. The second server 200 sends an OTP to the first server 300 within the answer of the status request. This first server 300 has to employ it to complete the authentication. The first server 300 requests to the user 100 the OTP that is going to be a temporal second factor (H). The second server 200 sends the same OTP to the to the user's dedicated program 102 (I). The user 100 recovers the OTP from the dedicated program 102 and introduces it in the browser 101 (J) and sends it to the first server 300 (K). The first server 300 can check if the OTP sent through the browser 101 matches with the one received with the account status (L). The first server 300 denies operation execution if the OTPs don't fit.

Then, in order to mitigate the effects of the MitB the present invention proposes four different options or embodiments. The differences between these options allow define four scenarios where the final implementation can be designed to be synchronous or asynchronous. It can be decided verify the information related with the operations and received through an unsecured channel, using the secure channel defined by the said second server to send a factor of integrity. It is also possible divide the critical information and send at last one of the resultant parts using the secure channel defined by the said second server.

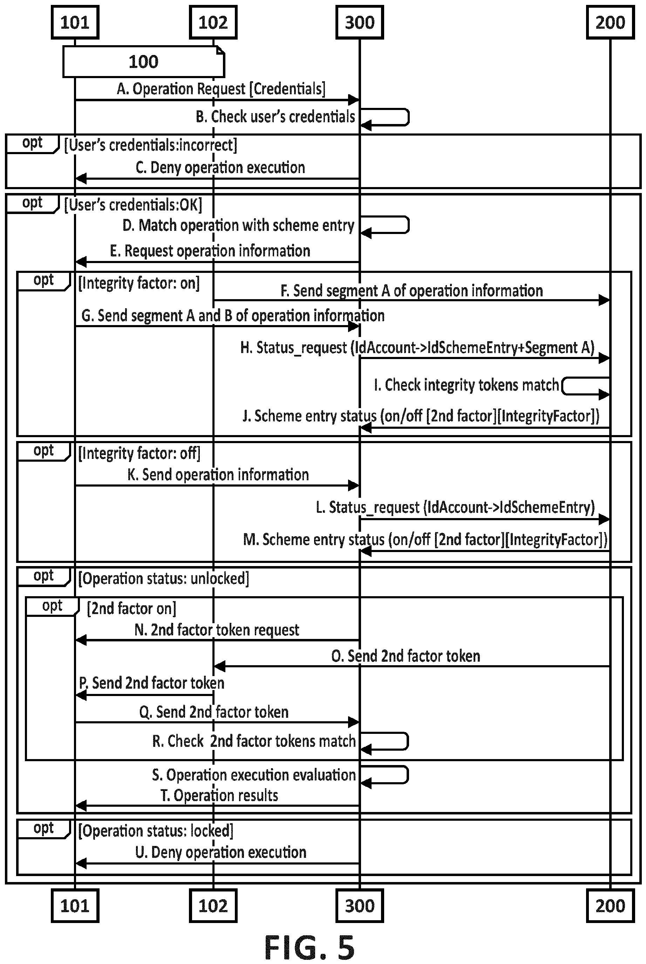

Figure 5 illustrates the first option proposed by the invention for mitigating said effect. For this embodiment, it is supposed that the first server 300 instructs the user 100 to enter part of the information (for instance a segment A as illustrated in the figure) used to complete the operation requested in the dedicated program 102 before completing the operation information, for example, in the browser 101. All these steps are done in synchronous way.

In Figure 5 it is showed the operation status verification process with operation integrity protection. This operation is proposed by the first server attached to the account management. The user 100, using for example a browser 101, requests, according to an embodiment, to execute an operation related with an account (A) of a first server 300. This operation can be to be logged in a particular service or to execute some other action related with the services provided by first server (e.g. Internet payment with a credit card). So once user 100 existence has been validated (B) by said first server 300, the latter makes the correspondence of the operation requested with the scheme entry in the hierarchy defined by this user's account (D) and demands to the browser 101 the information needed to perform the operation (E). If the user 100 has been instructed in the use of his or her dedicated program 102 to do the integrity verification, the user 100 then sends the segment A to the second server 200 (F) and in this case, the whole operation information needed to the first server 300 (G). The second server 200 registers the received information as part of the contents with the user's configuration. If this delivering is expected but the user 100 doesn't do it an error message could be send. Once the operation information is received, the first server 300 requests the status for this operation to the second server 200 (H). Enclosed with this request the segment A of the information received from the user 100 is sent to the second server 200.

Then the second server 200 initializes the credentials exchange before evaluating the scheme entry status from the root to the entry. The status of the user's account is retrieved and if it is unlocked the same evaluation is performed with every step founded until reach the scheme entry. The second server 200 also checks the two segment A received and associated with this operation (I). If the two segments are equal and the status is set in on the answer will be unlocked. In other case, if the segment checking process returns a segment mismatch the answer will be locked. The scheme entry status information is sent (J) and, with this information, the first server 300 makes the decision of allowing or blocking the user access to the operation.

Optionally, if the scheme entry status is valid (unlocked) and the second factor of authentication is activated, the second server 200 can send an OTP to the first server 300 within the answer of the status request. This first server 300 employs it to complete the authentication. The first server 300 requests to the user the OTP that is going to be a temporal second factor (N). The second server 200 sends the same OTP to the to the user's dedicated program 102 (O). The user 100 recovers the OTP from the dedicated program 102 and introduce it in the browser 101 (P) and sends it to the first server 300 (Q). The first servers can check if the OTP sent through the browser 101 matches with the one received with the account status (R). The first server 300 denies operation execution if the OTPs don't fit.

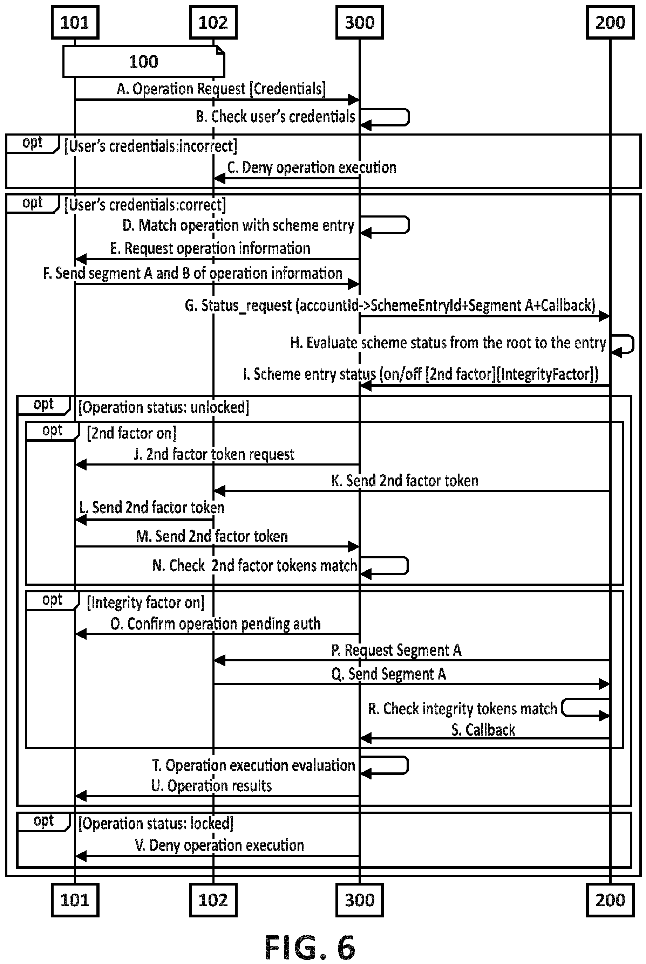

Figure 6 illustrates the second option proposed by the invention for mitigating said MitB effect. For this embodiment, again it is supposed that the first server 300 instructs the user 100 to enter part of the information (for instance the segment A as illustrated in the figure) used to complete the operation requested in the dedicated program 102 before completing the operation information, for example, in browser 101. However, in contrast with the first option, the integrity verification of the execution of the operation is done in an asynchronous way. The flow seems more intuitive than having to "start" the operation on two ends, the dedicated program 102 and the first server 300. However in this case the first server 300 need to wait until the user 100 confirms the operation. This could never happen leaving the operation unfinished, so to avoid that, a timeout associated with time the first server 300 has to wait to the callback identified in figure 6 as S is defined.

Again, in this embodiment, it is showed the operation status verification process with operation integrity protection. This operation is proposed by the first server 300 attached to the account management. The user 100, using for example a browser 101, requests, according to an embodiment, to execute an operation related with an account (A) of the first server 300. This operation can be to be logged in a particular service or to execute some other action related with the services provided by first server 300 (e.g. Internet payment with a credit card). So once user existence has been validated (B) by said first server 300, the latter makes the correspondence of the operation requested with the scheme entry in the hierarchy defined by this user's account (D) and demands to the browser 101 the information needed to perform the operation (E). The user sends the operation information needed to the first server (G) (as illustrated in the figure, segments A and B). Once the operation information is received, the first server 300 requests the status for this operation to the second server 200 (G). Enclosed with this request the segment A of the information received from the user 100 is sent to the second server 200 and it waits to receive the callback that informs about the result of the integrity verification.

Then the second server 200 initializes the credentials exchange before evaluating the scheme entry status from the root to the entry. The status of the user's account is retrieved and if it is unlocked the same evaluation is performed with every step founded until reach the scheme entry. The scheme entry status information is sent (I) and, with this information, the first server 300 makes the decision of allowing or blocking the user access to the operation. The first server 300 is informed if the integrity verification is pending on user authentication.

Optionally, if the scheme entry status is valid (unlocked) and the second factor of authentication is activated, the second server 200 can send an OTP to the first server 300 within the answer of the status request. This first server 300 has to employ it to complete the authentication. The first server 300 requests to the user 100 the OTP that is going to be a temporal second factor (J). The second server 200 sends the same OTP to the to the user's dedicated program 102 (K). The user 100 recovers the OTP from the dedicated program 102 and introduce it in the browser 101 (L) and sends it to the first server 300 (M). The first server 300 can check if the OTP sent through the browser 101 matches with the one received with the account status (N).

In case the operation is pending of the user's authentication to verify its integrity, the first server 300 informs the user 100 that the operation is pending of authentication (O). Asynchronously, the second server 200 requests to the user 100 through the dedicated program 102 the segment A of the operation information (A). Once the user 100 sends this segment A using the dedicate program 102 (Q), the second server 200 can checks if the two segments A received match (R). Then the second server 200 callback the first server 300 to communicate the result of this verification process (S).

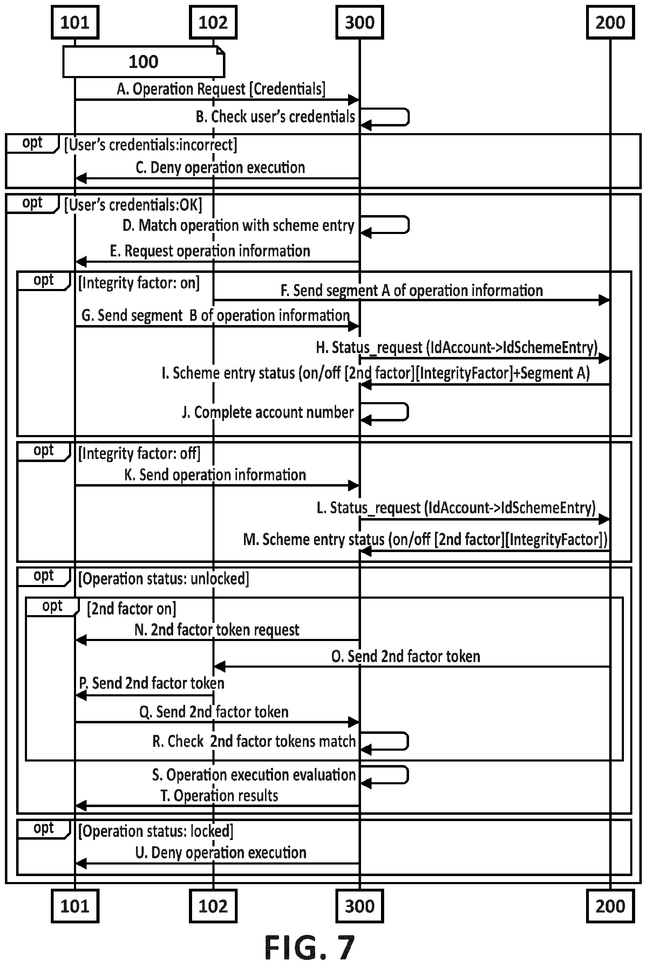

Figure 7 illustrates the third option proposed by the invention for mitigating said MitB effect. For this embodiment, again it is supposed that the first server 300 instructs the user 100 to enter part of the information (the segment A as illustrated in the figure) used to complete the operation requested in the dedicated program 102 before completing the operation information, for example, in the browser 101. All these next steps are done in a synchronous way. It is almost the same than first and second options but, in this case, the information needed (segment A) is not entered in the user's dedicated program 102 for validation. Now the segment A is sent using the user's dedicated program 102 to be used for completion of the operation information.

Again, it is showed the operation status verification process with operation integrity protection. This operation is proposed by the first server 300 attached to the account management. The user 100, using for example the browser 101, requests, according to an embodiment, to execute an operation related with an account (A) of the first server 300. This operation can be to be logged in a particular service or to execute some other action related with the services provided by first server (e.g. Internet payment with a credit card). So once user existence has been validated (B) by said first server 300, the latter makes the correspondence of the operation requested with the scheme entry in the hierarchy defined by this user's account (D) and demands to the browser 101 the information needed to perform the operation (E). If the user has been instructed in the use of his or her dedicated program 102 to do the integrity verification, the user 100 then sends the segment A to the second server 200 (F) and a different segment of the operation information needed (for instance a segment B) to the first server 300 (G). The second server 200 registers the information received as part of the contents with the user's configuration. If this delivering is expected but the user doesn't do it an error message is sent. Once the operation information is received, the first server 300 requests the status for this operation to the second server 200 (H).

Then the second server 200 initializes the credentials exchange before evaluating the scheme entry status from the root to the entry. The status of the user's account is retrieved and if it is unlocked the same evaluation is performed with every step founded until reach the scheme entry. The scheme entry status information is sent (I). Enclosed with the status response is the segment A which is received by the first server 300. Now the first server 300 can complete the operation information needed to perform the requested action (J). With this information, the first server 300 makes the decision of allowing or blocking the user access to the operation.

Optionally, if the scheme entry status is valid (unlocked) and the second factor of authentication is activated, the second server 200 can send an OTP to the first server 300 within the answer of the status request. This first server 300 has to employ it to complete the authentication. The first server 300 requests to the user 100 the OTP that is going to be a temporal second factor (N). The second server 200 sends the same OTP to the to the user's dedicated program 102 (O). The user 100 recovers the OTP from the dedicated program 102 and introduce it in the browser 101 (P) and sends it to the first server 300 (Q). The first servers can check if the OTP sent through the browser 101 matches with the one received with the account status (R). The first server 300 denies operation execution if the OTPs don't fit.

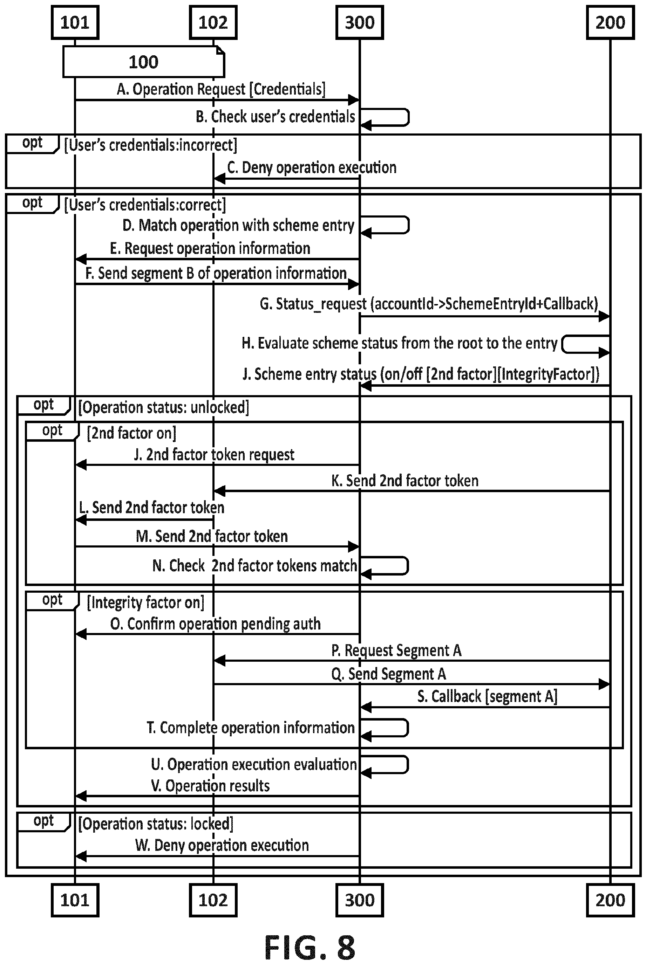

Figure 8 illustrates the fourth option proposed by the invention for mitigating said MitB effect. For this embodiment, it is supposed that the first server 300 instructs the user 100 to enter part of the information (the segment A as illustrated in the figure) used to complete the operation requested in the user's dedicated program (102) before completing the operation information. All these next steps are done in an asynchronous way.

Again, it is showed the operation status verification process with operation integrity protection. This operation is proposed by the first server 300 attached to the account management. The user 100, using for example the browser 101, requests, according to an embodiment, to execute an operation related with an account (A) of the first server 300. This operation can be to be logged in a particular service or to execute some other action related with the services provided by first server (e.g. Internet payment with a credit card). So once user existence has been validated (B) by said first server 300, the latter makes the correspondence of the operation requested with the scheme entry in the hierarchy defined by this user's account (D) and demands to the browser 101 the information needed to perform the operation (E). The user sends the operation information needed (segment B) to the first server 300 (G). Once the operation information is received, the first server 300 requests the status for this operation to the second server 200 (G). The first server 300 waits to receive the callback that informs about the result of the integrity verification.

Then the second server 200 initializes the credentials exchange before evaluating the scheme entry status from the root to the entry. The status of the user's account is retrieved and if it is unlocked the same evaluation is performed with every step founded until reach the scheme entry. The scheme entry status information is sent (I) and, with this information, the first server 300 makes the decision of allowing or blocking the user access to the operation.

Optionally, if the scheme entry status is valid (unlocked) and the second factor of authentication is activated, the second server 200 can send an OTP to the first server 300 within the answer of the status request. This first server 300 has to employ it to complete the authentication. The first server 300 requests to the user 100 the OTP that is going to be a temporal second factor (J). The second server 200 sends the same OTP to the to the user's dedicated program 102 (K). The user 100 recovers the OTP from the dedicated program 102 and introduce it in the browser 101 (L) and sends it to the first server 300 (M). The first servers can check if the OTP sent through the browser 101 matches with the one received with the account status (N).

If the scheme entry status reveals that the integrity verification is active, the first server 300 informs the user 100 that the operation is pending of authentication (O). Asynchronously, the second server requests to the user through the dedicated program 102 the segment A of the operation information (P). Once the user 100 sends this segment A using the dedicated program 102 (Q), the second server 200 executes the callback to the first server 300 to communicate the results of this verification process (S) and send the segment received from the user to the first server 300. The first server 300 then can complete the operation information needed to perform the requested action (T).

The scope of the present invention is defined in the following set of claims.

**Claims**

**1.**    A computer implemented method to prevent attacks against authorization systems, wherein a second server (200), in connection with a computing device of a user (100), via a second dedicated program (102) installed in said computing device, is used to manage a status of the accounts the user (100) has in a first server (300) and a status of the operations defined for a particular account, said account status and said operation status being set, whenever the user (100) wants, as valid or as invalid by the user (100) via the second dedicated program (102) and stored in a memory of the second server (200), and said account status and said operation status being set by the user (100) once a pairing process with the second server (200) being completed, said pairing process ensuring privacy to the user (100), the method comprising:

- receiving, by said first server (300), from the user (100) using a first dedicated program including a browser (101), a request to be logged into a service of said first server (300), said request including the provision of identification information validating the identity of the user (100) in the first server (300);
- once user existence has been validated by the first server (300), receiving, by said second server (200), from the first server (300), a request about a status regarding an account of the user (100) in the first server (300);
- in response to receiving the request, initializing a first credential exchange between said first server (300) and said second server (200) in order to provide mutual authentication, the credential exchange being performed via an authentication procedure based on certificates' exchange;

- verifying, by said second server (200), said account status;
- sending, by said second server (200), said account status to said first server (300); and
- using, by said first server (300), said received account status for:

　　◦ authorizing said service login request if said account status is set as valid, or
　　◦ rejecting said service login request if said account status is set as invalid,

wherein in response to said service login request being authorized, a further request is done by the user (100) via the first dedicated program (101) to perform an operation related to said account of the user (100) in said first server (300), the method further comprises following steps:

- performing an operation status verification by means of:

　　◦ determining, by said first server (300), what entry in a scheme of an hierarchy defined by said account corresponds with said requested operation;
　　◦ demanding, by said first server (300), to said user (100), information needed to perform said operation;
　　◦ in response to receiving the demand, sending, by said user (100), at least part of said information needed to said first server (300) and a part of said information needed to said second server (200) to complete the operation requested;
　　◦ upon said first server (300) having received said information needed, requesting to said second server (200) the operation status defined by the user (100) over said entry and the second server (200) registering the received part of information therein as part of user's configuration;
　　◦ initializing a second credential exchange between said first server (300) and said second server (200);
　　◦ evaluating, by said second server (200), a scheme entry status information from a root of said hierarchy scheme to said entry; and
　　◦ sending, by said second server (200), the result of said scheme entry status information evaluation to said first server (300); and

- using, by said first server (300), the result of said evaluation for allowing or blocking said requested operation.

2. A computer implemented method according to claim 1, wherein:

- the whole information needed to perform said operation is sent, by said user (100), through the first dedicated program (101), to said first server (300);
- taking, by said first server (300), from the whole information received from said user (100) the same part of information that said user (100) has sent to said second server (200) and enclosing said same part of information needed with said requesting of the operation status; and
- said second server (200) previous to perform said sending of the result of said scheme entry status information, comprises checking whether said information needed received from the user (100) through said second dedicated program (102) matches said information needed received from the first server (300), both information's being used as integrity tokens.

3. A computer implemented method according to claim 1, wherein:

- said at least part of information needed sent to said first server (300) is different to said part of information needed sent to said second server (200), said information needed by the first server (300) being sent through the first dedicated program (101); and
- said second server (200) comprises enclosing with the result of said scheme entry status information evaluation the part of information needed received from said user (100).

4. A computer implemented method according to claims 2 or 3, comprising notifying, by said second server (200), to said user (100), in case said information needed do not arrive.

5. A computer implemented method according to claim 1, wherein said sending of said part of information needed to said second server (200) is done after a request is made by said second server (200) to said second dedicated program (102), said request being made at least upon receiving from the first server (300) of said requesting of the operation status.

14

**6.** A computer implemented method according to claim 5, wherein:

- the whole information needed to perform said operation is sent, by said user (100) through the first dedicated program (101), to said first server (300);
- said first server (300) comprises enclosing with said requesting of the operation status the received information needed from said user (100); and
- said second server (200) previous to perform said sending of the result of said scheme entry status information evaluation comprises checking whether said information needed received from the second dedicated program (102) matches said information needed received from the first server (300), both information's being used as integrity tokens.

**7.** A computer implemented method according to claim 5, wherein:

- said at least part of information needed to said first server (300) is different to said part of information needed sent to said second server (200), said information needed by the first server (300) being sent through the first dedicated program (101) including a browser; and
- said second server (200) comprises sending said information needed received from the second dedicated program (102) to said first server (300).

**8.** A computer implemented method according to claims 6 or 7, wherein said first server (300) before using the result of said evaluation for allowing or blocking said requested operation comprises waiting until confirmation of said user (100).

**9.** A computer implemented method according to claim 8, wherein the time for performing said confirmation is limited.

**10.** A computer implemented method according to previous claims, further comprising using a second factor authentication, if said scheme entry status information is set as valid:

- sending, by said second server (200), an OTP to the first server (300) within the answer of the operation status request;
- requesting, by the first server (300), to the user (100), an OTP that the user (100) is going to use as temporal second factor;
- sending, by the second server (200), the same OTP sent to the first server (300) to the user (100) through said first user dedicated program (101);
- recovering, by the user (100), said requested temporal second factor OTP through said second dedicated program (102), introducing it into said first user dedicated program (101) and further sending the requested temporal second factor OTP via said first user dedicated program (101) to the first server (300); and
- checking, by the first server (300), if the received OTP from the second server (200) and the received temporal second factor OTP from said first user dedicated program (101) matches in order to allowing or blocking said requested operation.

**11.** A computer implemented method according to claim 1, comprising notifying, by said second server (200), the user (100), in case said service login request is rejected, said notifying comprising at least one of a sending of a Short Message Service (SMS), a sending of an email, a sending of a message by a smartphone messenger application, a highlighting or pushing in said second dedicated program (102) of said user computing device.

**12.** A computer implemented method according to claim 1, wherein said account status is set as valid or as invalid a certain period of time.

**13.** A computer implemented method according to claim 1, wherein said request to be logged into a service and/or said request to perform an operation are recorded in order to provide statistics.

**14.** A computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.

**15.** A computer program according to claim 14, further comprising program code means adapted to perform a second factor authentication according to the method of claim 10.

**Patentansprüche**

1. Computerimplementiertes Verfahren zur Verhinderung von Angriffen auf Autorisierungssysteme, wobei ein zweiter Server (200) in Verbindung mit einer Rechenvorrichtung eines Benutzers (100) über ein zweites dediziertes Programm (102), das in der genannten Rechenvorrichtung installiert ist, verwendet wird, um einen Zustand der Accounts, die der Benutzer (100) auf einem ersten Server (300) hat, und einen Zustand der für einen bestimmten Account definierten Vorgänge zu verwalten, wobei der genannte Accountzustand und der genannte Vorgangszustand immer dann, wenn der Benutzer (100) es wünscht, über das zweite dedizierte Programm (102) durch den Benutzer (100) als gültig oder ungültig gesetzt und in einem Speicher des zweiten Servers (200) gespeichert werden, und wobei der genannte Accountzustand und genannte Vorgangszustand durch den Benutzer (100) dann gesetzt werden, sobald ein Paarungsprozess mit dem zweiten Server (200) erfolgt ist, wobei der genannte Paarungsprozess dem Benutzer (100) den Datenschutz sichert, wobei das Verfahren umfasst:

   - Empfangen durch den genannten ersten Server (300) einer Anforderung vom Benutzer (100) mithilfe eines ersten dedizierten Programms (101), welches einen Browser beinhaltet, in einen Dienst des genannten ersten Servers (300) eingeloggt zu werden, wobei die genannte Anforderung das Bereitstellen von Identifikationsinformationen beinhaltet, die die Identität des Benutzers (100) beim ersten Server (300) bestätigen;
   - sobald die Benutzerexistenz durch den ersten Server (300) überprüft wurde, Empfangen einer Anforderung seitens des genannten zweiten Servers (200), vom ersten Server (300) über einen Zustand eines Accounts des Benutzers (100) auf dem ersten Server (300);
   - als Reaktion auf das Empfangen der Anforderung Initialisieren eines ersten Legitimationsaustauschs zwischen dem genannten ersten Server (300) und dem genannten zweiten Server (200) zur Bereitstellung gegenseitiger Authentifizierung, wobei der Legitimationsaustausch über ein Authentifizierungsverfahren basierend auf dem Austausch von Zertifikaten erfolgt;
   - Überprüfen des genannten Accountzustands durch den genannten zweiten Server (200);
   - Senden des genannten Accountzustands über den genannten zweiten Server (200) an den genannten ersten Server (300); und
   - Verwenden des empfangenen genannten Accountzustands durch den genannten ersten Server (300) zum:

      ∘ Autorisieren der genannten Dienst-Login-Anforderung, wenn der genannte Accountzustand als gültig gesetzt ist, oder
      ∘ Ablehnen der genannten Dienst-Login-Anforderung, wenn der genannte Accountzustand als ungültig gesetzt ist,

   wobei als Reaktion auf die Autorisierung der genannten Dienst-Login-Anforderung eine weitere Anforderung durch den Benutzer (100) über das erste dedizierte Programm (101) zur Durchführung eines Vorgangs im Zusammenhang mit dem genannten Account des Benutzers (100) auf dem genannten ersten Server (300) erfolgt, wobei das Verfahren ferner folgende Schritte umfasst:

   - Durchführen einer Vorgangszustandsüberprüfung mittels:

      ∘ Bestimmen, durch den genannten ersten Server (300), welcher Eintrag in einem Schema einer durch den genannten Account definierten Hierarchie dem genannten angeforderten Vorgang entspricht;
      ∘ Anfordern von Informationen, die zum Ausführen des genannten Vorgangs erforderlich sind, durch den genannten ersten Server (300) beim genannten Benutzer (100);
      ∘ als Reaktion auf das Empfangen der Anforderung durch den genannten Benutzer (100) Senden mindestens eines Teils der genannten benötigten Informationen an den genannten ersten Server (300) und eines Teils der genannten benötigten Informationen an den genannten zweiten Server (200), um den angeforderten Vorgang durchzuführen;
      ∘ wenn der genannte erste Server (300) die genannten benötigten Informationen empfangen hat, Anfordern des vom Benutzer (100) über den genannten Eintrag definierten Vorgangszustands beim genannten zweiten Server (200) und Erfassen des darin empfangenen Teils der Informationen durch den zweiten Server (200) als Teil der Benutzerkonfiguration;
      ∘ Initialisieren eines zweiten Legitimationsaustauschs zwischen dem genannten ersten Server (300) und dem genannten zweiten Server (200);

◦ Auswerten einer Schema-Eintragsstatusinformation durch den genannten zweiten Server (200) von einem Stamm des genannten Hierarchieschemas zum genannten Eintrag; und
◦ Senden des genannten Ergebnisses der Auswertung der Schema-Eintragsstatusinformation durch den genannten zweiten Server (200) an den genannten ersten Server (300); und

- Verwenden des Ergebnisses der genannten Auswertung durch den genannten ersten Server (300) zum Zulassen oder Blockieren des genannten angeforderten Vorgangs.

2. Computerimplementiertes Verfahren nach Anspruch 1, wobei:

- die gesamten, zum Durchführen des genannten Vorgangs benötigten Informationen vom genannten Benutzer (100) über das erste dedizierte Programm (101) an den ersten genannten Server (300) gesendet werden;
- der genannte erste Server (300) denselben Teil der Informationen, die der genannte Benutzer (100) an den genannten zweiten Server (200) gesendet hat, aus den vom genannten Benutzer eingegangenen Gesamtinformationen entnimmt und den genannten selben Teil der benötigen Informationen in die genannte Anforderung des Vorgangszustands einfügt; und
- der genannte zweite Server (200) vor dem genannten Senden des Ergebnisses der genannten Schema-Eintragsstatusinformation, das Überprüfen dessen umfasst, ob die genannten benötigten Information, die über das genannte zweite dedizierte Programm (102) ausgehend vom Benutzer (100) empfangen wurden, mit den genannten benötigten Informationen übereinstimmen, die ausgehend vom ersten Server (300) empfangen wurden, wobei beide Informationen als Integritätstoken verwendet werden.

3. Computerimplementiertes Verfahren nach Anspruch 1, wobei:

- der genannte mindestens eine Teil der an den genannten ersten Server (300) gesendeten benötigten Informationen sich von dem genannten Teil der an den genannten zweiten Server (200) gesendeten benötigten Informationen unterscheidet, wobei die genannten vom ersten Server (300) benötigten Informationen über das erste dedizierte Programm (101) gesendet werden; und
- der genannte zweite Server (200) das Einfügen des Teils der benötigten Informationen, die ausgehend vom Benutzer (100) empfangen werden, in das Ergebnis der Auswertung der Schema-Eintragsstatusinformation umfasst.

4. Computerimplementiertes Verfahren nach Anspruch 2 oder 3, umfassend das Benachrichtigen des genannten Benutzers (100) durch den genannten zweiten Server (200), falls die genannten benötigten Informationen nicht ankommen.

5. Computerimplementiertes Verfahren nach Anspruch 1, wobei das genannte Senden des genannten Teils der benötigten Informationen an den genannten zweiten Server (200) erfolgt, nachdem eine Anforderung durch den genannten zweiten Server (200) an das genannte zweite dedizierte Programm (102) erfolgt ist, wobei die genannte Anforderung mindestens nach dem Empfangen der genannten Anforderung des Vorgangszustands vom ersten Server (300) erfolgt.

6. Computerimplementiertes Verfahren nach Anspruch 5, wobei:

- die gesamten Informationen, die zum Ausführen des Vorgangs benötigt werden, vom genannten Benutzer (100) über das erste dedizierte Programm (101) an den genannten ersten Server (300) gesendet werden;
- der genannte erste Server (300) das Einfügen der empfangenen benötigten Informationen vom genannten Benutzer (100) in die genannte Anforderung des Vorgangszustands umfasst; und
- der genannte zweite Server (200) vor dem Senden des Ergebnisses der genannten Auswertung der Schema-Eintrittsstatusinformationen prüft, ob die genannten benötigten Informationen, die ausgehend vom zweiten dedizierten Programm (102) empfangen werden, mit den benötigten Informationen übereinstimmen, die ausgehend vom ersten Server (300) empfangen werden, wobei beide Informationen als Integritätstoken verwendet werden.

7. Computerimplementiertes Verfahren nach Anspruch 5, wobei:

- der genannte mindestens eine Teil der an den genannten ersten Server (300) gesendeten benötigten Informationen sich von dem genannten Teil der benötigten Informationen, die an den genannten zweiten Server (200) gesendet werden, unterscheidet, wobei die genannten vom ersten Server (300) benötigten Informationen über das erste dedizierte Programm (101), das einen Browser beinhaltet, gesendet werden; und
- der genannte zweite Server (200) das Senden der genannten benötigten Informationen, die ausgehend vom zweiten dedizierten Programm (102) empfangen wurden, an den genannten ersten Server (300) umfasst.

8. Computerimplementiertes Verfahren nach den Ansprüchen 6 oder 7, wobei der genannte erste Server(300) vor dem Verwenden des Ergebnisses der genannten Auswertung zum Zulassen oder Blockieren des genannten angeforderten Vorgangs das Warten bis zur Bestätigung durch den genannten Benutzer (100) umfasst.

9. Computerimplementiertes Verfahren nach Anspruch 8, wobei die Zeit zum Durchführen der genannten Bestätigung begrenzt ist.

10. Computerimplementiertes Verfahren nach vorstehenden Ansprüchen, ferner umfassend die Verwendung einer Zweitfaktor-Authentifizierung, wenn die Schema-Eintragsstatusinformation als gültig eingestuft ist:

- Senden eines OTP an den ersten Server (300) durch den genannten zweiten Server (200) innerhalb der Antwort auf die Anforderung des Vorgangszustands;
- Anfordern eines OTP beim Benutzer (100), durch den ersten Server (300), das der Benutzer (100) als temporären Zweitfaktor verwenden wird;
- Senden desselben, an den ersten Server (300) gesendeten OTP, durch den zweiten Server (200) an den Benutzer (100) über das genannte erste benutzerdefinierte Programm (101);
- Abrufen des genannten angeforderten temporären Zweitfaktor-OTP durch den Benutzer (100) über das genannte zweite dedizierte Programm (102), Einfügen desselben in das genannte erste dedizierte Benutzerprogramm (101) und ferner Senden des angeforderten temporären Zweitfaktor-OTP über das genannte erste benutzerdefinierte Programm (101) an den ersten Server (300); und
- Überprüfen, durch den ersten Server (300), ob das vom zweiten Server (200) eingegangene OTP mit dem vom genannten ersten dedizierten Benutzerprogramm (101) eingegangenen temporären Zweitfaktor-OTP übereinstimmt, um den genannten angeforderten Vorgang zuzulassen oder zu blockieren.

11. Computerimplementiertes Verfahren nach Anspruch 1, umfassend die Benachrichtigung des Benutzers (100) durch den genannten zweiten Server (200), falls die genannte Dienst-Login-Anforderung abgelehnt wird, wobei die genannte Benachrichtigung mindestens eines der folgenden umfasst: Senden einer Kurzmitteilung (SMS), Senden einer E-Mail, Senden einer Nachricht durch eine Smartphone-Messenger-Anwendung, Hervorheben oder Einschieben im genannten zweiten dedizierten Programm (102) der genannten Rechenvorrichtung des Benutzers.

12. Computerimplementiertes Verfahren nach Anspruch 1, wobei der genannte Accountzustand für einen bestimmten Zeitraum als gültig oder ungültig gesetzt wird.

13. Computerimplementiertes Verfahren nach Anspruch 1, wobei die genannte Anforderung, in einen Dienst eingeloggt zu werden und/oder die genannte Anforderung, einen Vorgang durchzuführen, erfasst werden, um Statistiken bereitzustellen.

14. Computerprogramm, umfassend Computerprogrammcodemittel, die so ausgelegt sind, dass sie die Schritte gemäß dem Verfahren nach Anspruch 1 ausführen, wenn das genannte Programm auf einem Computer, einem digitalen Signalprozessor, einer feldprogrammierbaren Gate-Anordnung, einem anwendungsspezifischen integrierten Schaltkreis, einem Mikroprozessor, einem Mikrocontroller oder einer anderen Form von programmierbarer Hardware ausgeführt wird.

15. Computerprogramm nach Anspruch 14, ferner umfassend Programmcodemittel, die zum Durchführen einer Zweitfaktor-Authentifizierung gemäß dem Verfahren nach Anspruch 10 ausgelegt sind.

**Revendications**

1. Procédé mis en oeuvre par ordinateur pour empêcher des attaques dirigées contre des systèmes d'autorisation, dans lequel un deuxième serveur (200), en liaison avec un dispositif informatique d'un utilisateur (100), via un deuxième programme dédié (102) installé dans ledit dispositif informatique, est utilisé pour gérer un état des comptes que l'utilisateur (100) a dans un premier serveur (300) et un état des opérations définies pour un compte particulier, ledit état de compte et ledit état d'opération étant définis, chaque fois que l'utilisateur (100) le souhaite, comme valide ou invalide par l'utilisateur (100) via le deuxième programme dédié (102) et stockés dans une mémoire du deuxième serveur (200), et ledit état de compte et ledit état d'opération étant définis par l'utilisateur (100) une fois qu'un processus de couplage avec le deuxième serveur (200) est terminé, ledit processus de couplage assurant une confidentialité à l'utilisateur (100), le procédé comprenant :

- recevoir, par ledit premier serveur (300), à partir de l'utilisateur (100) en utilisant un premier programme dédié comprenant un navigateur (101), une demande de connexion à un service dudit premier serveur (300), ladite demande comprenant la fourniture d'information d'identification validant l'identité de l'utilisateur (100) sur le premier serveur (300) ;
- une fois que l'existence de l'utilisateur a été validée par le premier serveur (300), recevoir, par ledit deuxième serveur (200), à partir du premier serveur (300), une demande concernant un état relatif à un compte de l'utilisateur (100) dans le premier serveur (300);
- en réponse à la réception de la demande, initialiser un premier échange d'informations d'identification entre ledit premier serveur (300) et ledit deuxième serveur (200) afin de fournir une authentification mutuelle, l'échange d'informations d'identification étant effectué via une procédure d'authentification basée sur l'échange de certificats ;
- vérifier, par ledit deuxième serveur (200), ledit état de compte;
- envoyer, par ledit deuxième serveur (200), ledit état de compte audit premier serveur (300) ; et
- utiliser, par ledit premier serveur (300), ledit état de compte reçu pour :

  ◦ autoriser ladite demande de connexion de service si ledit état de compte est défini comme valide, ou
  ◦ rejeter ladite demande de connexion de service si ledit état de compte est défini comme invalide,

dans lequel, en réponse à ladite demande de connexion de service étant autorisée, une autre demande est effectuée par l'utilisateur (100) via le premier programme dédié (101) pour effectuer une opération liée audit compte de l'utilisateur (100) dans ledit premier serveur (300), le procédé comprend en outre les étapes suivantes :

- effectuer une vérification de l'état de l'opération à l'aide de :

  ◦ déterminer, par ledit premier serveur (300), quelle entrée dans un schéma d'une hiérarchie définie par ledit compte correspond à ladite opération demandée ;
  ◦ demander, par ledit premier serveur (300), audit utilisateur (100), de l'information nécessaire pour effectuer ladite opération ;
  ◦ en réponse à la réception de la demande, envoyer, par ledit utilisateur (100), au moins une partie de ladite information nécessaire audit premier serveur (300) et une partie de ladite information nécessaire audit deuxième serveur (200) pour compléter l'opération demandée ;
  ◦ lorsque ledit premier serveur (300) a reçu ladite information nécessaire, demander audit deuxième serveur (200) l'état d'opération défini par l'utilisateur (100) sur ladite entrée et le deuxième serveur (200) enregistrant la partie reçue d'information dans celui-ci dans le cadre de la configuration de l'utilisateur ;
  ◦ initialiser un deuxième échange d'informations d'identification entre ledit premier serveur (300) et ledit deuxième serveur (200) ;
  ◦ évaluer, par ledit deuxième serveur (200), une information d'état d'entrée de schéma depuis une racine dudit schéma hiérarchique vers ladite entrée ; et
  ◦ envoyer, par ledit deuxième serveur (200), le résultat de ladite évaluation d'information d'état d'entrée de schéma audit premier serveur (300) ; et

- utiliser, par ledit premier serveur (300), le résultat de ladite évaluation pour permettre ou bloquer ladite opération demandée.

2. Procédé mis en oeuvre par ordinateur selon la revendication 1, dans lequel :

- toute l'information nécessaire pour effectuer ladite opération est envoyé, par ledit utilisateur (100), à travers le premier programme dédié (101), audit premier serveur (300);
- prendre, par ledit premier serveur (300), à partir de toute l'information reçue à partir dudit utilisateur (100), la même partie d'information que ledit utilisateur (100) a envoyée audit deuxième serveur (200) et joindre ladite même partie d'information nécessaire avec ladite demande de l'état d'opération ; et
- ledit deuxième serveur (200) avant d'effectuer ledit envoi du résultat de ladite information d'état d'entrée de schéma, comprend la vérification de si ladite information nécessaire reçue à partir de l'utilisateur (100) via ledit deuxième programme dédié (102) corresponde à ladite information nécessaire reçue à partir du premier serveur (300), les deux informations étant utilisées comme jetons d'intégrité.

3. Procédé mis en oeuvre par ordinateur selon la revendication 1, dans lequel :

- ladite au moins une partie d'information nécessaire envoyée audit premier serveur (300) est différente de ladite partie d'information nécessaire envoyée audit deuxième serveur (200), ladite information nécessaire au premier serveur (300) étant envoyée via le premier programme dédié (101) ; et
- ledit deuxième serveur (200) comprend le fait de joindre au résultat de ladite évaluation d'information d'état d'entrée de schéma la partie d'information nécessaire reçue à partir dudit utilisateur (100).

4. Procédé mis en oeuvre par ordinateur selon les revendications 2 ou 3, comprenant la notification, par ledit deuxième serveur (200), audit utilisateur (100), au cas où ladite information nécessaire n'arrive pas.

5. Procédé mis en oeuvre par ordinateur selon la revendication 1, dans lequel ledit envoi de ladite partie d'information nécessaire audit deuxième serveur (200) est effectué après qu'une demande est faite par ledit deuxième serveur (200) audit deuxième programme dédié (102), ladite demande étant faite au moins après recevoir à partir du premier serveur (300) ladite demande de l'état du fonctionnement.

6. Procédé mis en oeuvre par ordinateur selon la revendication 5, dans lequel :

- toute l'information nécessaire pour effectuer ladite opération est envoyé, par ledit utilisateur (100) à travers le premier programme dédié (101), audit premier serveur (300);
- ledit premier serveur (300) comprend le fait de joindre à ladite demande d'état d'opération l'information nécessaire reçue à partir dudit utilisateur (100) ; et
- ledit deuxième serveur (200) avant d'effectuer ledit envoi du résultat de ladite évaluation d'information d'état d'entrée de schéma comprend la vérification de si ladite information nécessaire reçue à partir du deuxième programme dédié (102) corresponde à ladite information nécessaire reçue à partir du premier serveur (300), les deux informations étant utilisées comme jetons d'intégrité.

7. Procédé mis en oeuvre par ordinateur selon la revendication 5, dans lequel :

- ladite au moins une partie d'information nécessaire audit premier serveur (300) est différente de ladite partie d'information nécessaire envoyée audit deuxième serveur (200), ladite information nécessaire au premier serveur (300) étant envoyée via le premier programme dédié (101) incluant un navigateur ; et
- ledit deuxième serveur (200) comprend l'envoi de ladite information nécessaire reçue à partir du deuxième programme dédié (102) audit premier serveur (300).

8. Procédé mis en oeuvre par ordinateur selon les revendications 6 ou 7, dans lequel ledit premier serveur (300) avant d'utiliser le résultat de ladite évaluation pour permettre ou bloquer ladite opération demandée comprend l'attente jusqu'à confirmation dudit utilisateur (100).

9. Procédé mis en oeuvre par ordinateur selon la revendication 8, dans lequel le temps pour effectuer ladite confirmation est limité.

10. Procédé mis en oeuvre par ordinateur selon les revendications précédentes, comprenant en outre l'utilisation d'une authentification de deuxième facteur, si ladite information d'état d'entrée de schéma est définie comme valide :

- envoyer, par ledit deuxième serveur (200), un OTP au premier serveur (300) dans la réponse de la demande d'état d'opération ;
- demander, par le premier serveur (300), à l'utilisateur (100), un OTP que l'utilisateur (100) va utiliser comme deuxième facteur temporel ;
- envoyer, par le deuxième serveur (200), le même OTP envoyé au premier serveur (300) à l'utilisateur (100) par l'intermédiaire dudit premier programme dédié d'utilisateur (101);
- récupérer, par l'utilisateur (100), ledit OTP de deuxième facteur temporel demandé par l'intermédiaire dudit deuxième programme dédié (102), l'introduire dans ledit premier programme dédié d'utilisateur (101) et envoyer en outre l'OTP de deuxième facteur temporel demandé via ledit premier programme dédié d'utilisateur (101) au premier serveur (300) ; et
- vérifier, par le premier serveur (300), si l'OTP reçu à partir du deuxième serveur (200) et l'OTP de deuxième facteur temporel reçu à partir dudit premier programme dédié d'utilisateur (101) sont les mêmes afin de permettre ou de bloquer ladite opération demandée.

11. Procédé mis en oeuvre par ordinateur selon la revendication 1, comprenant la notification, par ledit deuxième serveur (200), de l'utilisateur (100), en cas où ladite demande de connexion de service est rejetée, ladite notification comprenant au moins un parmi un envoi d'un service de messages courts (SMS), un envoi d'un courrier électronique, un envoi d'un message par une application de messagerie pour téléphone intelligent, une mis en évidence ou une poussée dans ledit deuxième programme dédié (102) dudit dispositif informatique de l'utilisateur.

12. Procédé mis en oeuvre par ordinateur selon la revendication 1, dans lequel ledit état de compte est défini comme valide ou comme invalide pendant une certaine période de temps.

13. Procédé mis en oeuvre par ordinateur selon la revendication 1, dans lequel ladite demande de connexion à un service et/ou ladite demande d'effectuer une opération sont enregistrées afin de fournir des statistiques.

14. Programme informatique comprenant des moyens de code de programme informatique adaptés pour exécuter les étapes selon le procédé de la revendication 1 lorsque ledit programme est exécuté sur un ordinateur, un processeur de signaux numériques, un réseau de portes programmables sur site, un circuit intégré spécifique d'application, un microprocesseur, un microcontrôleur ou toute autre forme de hardware programmable.

15. Programme informatique selon la revendication 14, comprenant en outre des moyens de code de programme adaptés pour effectuer une authentification de deuxième facteur selon le procédé de la revendication 10.

FIG. 1

**FIG. 2**

EP 2 860 934 B1

**FIG. 3**

**FIG. 4**

**FIG. 5**

**FIG. 6**

**FIG. 7**

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009183247 A1
- US 2013247165 A1
- US 2004030932 A

**Non-patent literature cited in the description**

- The quest to replace passwords: A framework for comparative evaluation of web authentication schemes. In Security and Privacy (SP). **BONNEAU, J. ; HERLEY, C. ; VAN OORSCHOT, P. C. ; STAJANO, F.** 2012 IEEE Symposium on. IEEE, May 2012, 553-567
- **BURR, W. E. ; DODSON, D. F. ; POLK, W. T.** Electronic authentication guideline. *NIST Special Publication,* 2006, vol. 800, 63
- Nemesis: Preventing Authentication & Access Control Vulnerabilities in Web Application. **DALTON, M. ; KOZYRAKIS, C. ; ZELDOVICH, N.** Proceedings of the 18th conference on USENIX security symposium. USENIX Association, 267-282

- **EVANS, D. ; BOND, P. ; BEMENT, A.** Security Requirements for Cryptographic Modules. *FIPS PUB 140-2 - FEDERAL INFORMATION PROCESSING STANDARDS PUBLICATION, http://csrc.nist.gov/publications/fips/fips140-2/fips 1402.pdf*
- **MCGLOIN M. ; HUNT P.** *OAuth 2.0 Threat Model and Security Considerations,* January 2013, ISSN 2070-1721, http://tools.ietf.org/pdf/rfc6819.pdf
- Static detection of Access control vulnerability in web applications. **SUN, F. ; XU, L. ; SU,Z.** Proceedings of the 20th USENIX conference on Security. USENIX, August 2011, 11-11
- **WANG, R. ; ZHOU, Y. ; CHEN, S. ; QADEER, S. ; EVANS, D. ; GUREVICH, Y.** Explicating SDKs: Uncovering Assumptions Underlying Secure Authentication and Authorization. *Microsoft Research Technical Report MSR-TR-2013,* 2013, vol. 37